# EUROPÄISCHE PATENTSCHRIFT

(11) **EP 1 678 410 B1**
(45) Veröffentlichungstag und Bekanntmachung des Hinweises auf die Patenterteilung: **11.08.2010**
(21) Anmeldenummer: 05761838.1
(22) Anmeldetag: 30.06.2005
(51) Int. Cl.: F01D 5/30

(54) **VERFAHREN ZUM VERBINDEN VON SCHAUFELBLÄTTERN MIT SCHAUFELFÜSSEN ODER ROTORSCHEIBEN BEI DER HERSTELLUNG UND/ODER REPARATUR VON GASTURBINENSCHAUFELN ODER INTEGRAL BESCHAUFELTEN GASTURBINENROTOREN**
METHOD FOR JOINING BLADES TO BLADE ROOTS OR ROTOR DISKS WHEN PRODUCING AND/OR REPAIRING GAS TURBINE BLADES OR INTEGRALLY BLADED GAS TURBINE ROTORS
PROCÉDÉ DE LIAISON D'AUBES À DES PIEDS D'AUBES OU À DES DISQUES DE ROTOR LORS DE LA FABRICATION ET / OU DE LA RÉPARATION D'AUBES DE TURBINES À GAZ OU DE ROTORS DE TURBINES À GAZ À AUBES CONSTITUÉES D'UN SEUL TENANT AVEC LE ROTOR

(30) Priorität: 08.07.2004 DE 102004032975
(43) Veröffentlichungstag der Anmeldung: 12.07.2006
(73) Patentinhaber: MTU Aero Engines GmbH, 80995 München (DE)
(72) Erfinder: MEIER. Reinhold, 84405 Dorfen (DE)
(86) Internationale Anmeldenummer: PCT/DE2005/001150
(87) Internationale Veröffentlichungsnummer: WO 2006/005296

(56) Entgegenhaltungen:
- CH-A- 310 029
- US-A- 3 003 745
- US-A- 5 511 949
- KARL-HERMANN RICHTER, SVEN ORBAN, STEFFEN NOWOTNY: "Laser Cladding of the Titanium Alloy TI6242 to restore damaged blades"[Online] 7. Oktober 2004 (2004-10-07), XP002360040 ICALEO 2004, San Francisco, California, USA Gefunden im Internet: URL:http://www.mtu.de/channel/files/pdf/la ser_cladding_of_the_titanium_alloy.pdf> [gefunden am 2005-12-19]
- STIMPER, BERND: "Lasereinsatz zum Generieren und Reparieren in der Triebwerksteileinstandsetzung"[Online] 30. September 2003 (2003-09-30), XP002360041 OTTI Profiforum, Regensburg, Germany Gefunden im Internet: URL:http://www.mtu.de/channel/files/pdf/32 724Stimper.pdf> [gefunden am 2005-12-19]

## Beschreibung

Die Erfindung betrifft ein Verfahren zum Verbinden von Schaufelblättern mit Schaufelfüßen oder Rotorscheiben bei der Herstellung und/oder Reparatur von Gasturbinenschaufeln oder integral beschaufelten Gasturbinenrotoren.

Gasturbinen, wie zum Beispiel Flugtriebwerke, verfügen über mindestens einen Verdichter sowie mindestens eine Turbine, wobei der oder jeder Verdichter sowie die oder jede Turbine mindestens eine Stufe umfassen, und wobei die oder jede Stufe eines jeden Verdichters sowie einer jeden Turbine von einem feststehenden Leitschaufelkranz sowie einem rotierenden Laufschaufelkranz gebildet sind. Die den oder jeden rotierenden Laufschaufelkranz bildenden Laufschaufeln verfügen über jeweils ein aerodynamisch geformtes Schaufelblatt, wobei das Schaufelblatt jeder Laufschaufel entweder über einen Schaufelfuß in entsprechenden Ausnehmungen einer Rotorscheibe verankert ist oder mit der Rotorscheibe unter Bildung eines integral geschaufelten Gasturbinenrotors fest verbunden ist. Integral beschaufelte Gasturbinenrotoren werden auch als Blisc (Bladed Disc) oder Bling (Bladed Ring) bezeichnet.

Insbesondere die Schaufelblätter der Laufschaufeln einer Gasturbine unterliegen während des Betriebs der Gasturbine stark oxidierenden, korrodierenden oder auch erodierenden Bedingungen, sodass dieselben einem erheblichen Verschleiß ausgesetzt sind. So kann es zum Beispiel bei integral beschaufelten Rotoren erforderlich sein, ein beschädigtes Schaufelblatt zur Reparatur des integral beschaufelten Gasturbinenrotors zu erneuern. Hierzu ist es dann erforderlich, ein neues Schaufelblatt mit der Rotorscheibe des Gasturbinenrotors an der Stelle, an welcher ein beschädigtes Schaufelblatt entfernt wurde, zu verbinden. Bei der Neuherstellung von integral beschaufelte Gasturbinenrotoren müssen alle Schaufelblätter mit der Rotorscheibe verbunden werden. Bei der Neuherstellung einzelner Gasturbinenschaufeln ist es erforderlich, ein Schaufelblatt mit einem entsprechenden Schaufelfuß zu verbinden.

Zur Verbindung von Schaufelblättern mit Schaufelfüßen oder Rotorscheiben zur Herstellung bzw. Reparatur von Gasturbinenschaufeln oder integral beschaufelten Gasturbinenrotoren kommt nach dem Stand der Technik das lineare Reibschweißen oder das induktive Hochfrequenzpressschweißen zum Einsatz. Sowohl das lineare Reibschweißen als auch das induktive Hochfrequenzpressschweißen sind insbesondere bei hochwarmfesten Werkstoffen aufwendig und hinsichtlich der Prozesssicherheit mit Risiken behaftet. Im Stand der Technik wird ein Verfahren gemäβ des Oberbegriffs des unabhängigen Anspruchs 1 in dem Dokument US-5511949-A1 offenbart.

Hiervon ausgehend liegt der vorliegenden Erfindung das Problem zu Grunde, ein neuartiges Verfahren zum Verbinden von Schaufelblättern mit Schaufelfüßen oder Rotorscheiben bei der Herstellung und/oder Reparatur von Gasturbinenschaufeln oder integral beschaufelten Gasturbinenrotoren zu schaffen.

Dieses Problem wird durch ein Verfahren zum Verbinden von Schaufelblättern mit Schaufelfüßen oder Rotorscheiben bei der Herstellung und/oder Reparatur von Gasturbinenschaufeln oder integral beschaufelten Gasturbinenrotoren im Sinne von Patentanspruch 1 gelöst.

Das erfindungsgemäße Verfahren umfasst zumindest die folgenden Schritte:
a) Bereitstellen eines Schaufelblatts und eines mit dem Schaufelblatt zu verbindenden Schaufelfußes oder einer mit dem Schaufelblatt zu verbindenden Rotorscheibe, wobei das Schaufelblatt und der Schaufelfuß bzw. die Rotorscheibe an zu verbindenden Abschnitten derselben eine Aufdickung aufweisen; b) Bearbeiten der miteinander zu verbindenden Abschnitte von Schaufelblatt und Schaufelfuß bzw. Rotorscheibe unter Ausbildung von Ausnehmungen; c) nachfolgendes zueinander Ausrichten des Schaufelblatts und des mit dem Schaufelblatt zu verbindenden Schaufelfußes bzw. der Rotorscheibe, wobei gegenüberliegende Ausnehmungen mindestens eine nutförmige Nahtvorbereitung begrenzen; d) Verbinden von Schaufelblatt und Schaufelfuß bzw. Rotorscheibe im Bereich der oder jeder Nahtvorbereitung durch Laserpulverauftragweißen; e) Bearbeiten von miteinander verbundenem Schaufelblatt und Schaufelfuß bzw. Rotorscheibe zur Bereitstellung einer Gasturbinenschaufel oder eines integral beschaufelten Gasturbinenrotors mit einem vorgegebenen geometrischen Profil.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigen:
- Fig. 1a-1g: eine Rotorscheibe und ein Schaufelblatt in einer Abfolge von Verfahrenschritten zur Verdeutlichung des erfindungsge- mäßen Verfahrens bei der Reparatur eines integral beschau- felten Gasturbinenrotors in stark schematisierter Darstel- lung; und
- Fig. 2a-2d: einen Schaufelfuß und ein Schaufelblatt in einer Abfolge von Verfahrenschritten zur Verdeutlichung des erfindungsge- mäßen Verfahrens bei der Herstellung einer Gasturbinen- schaufel in stark schematisierter Darstellung.

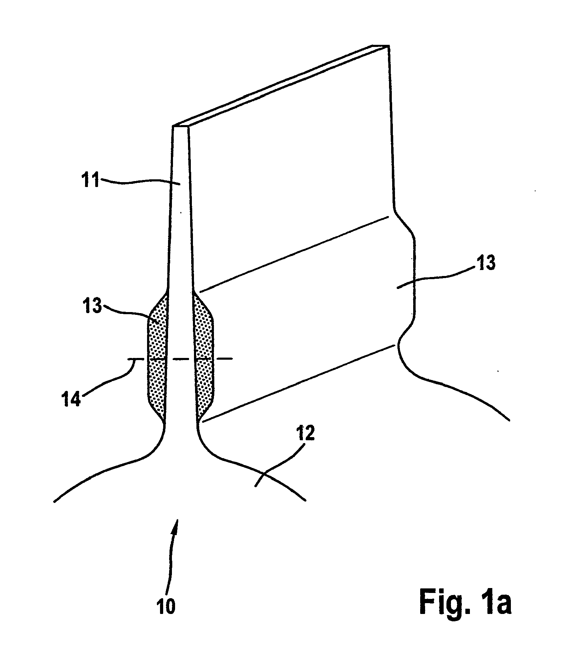

Die Fig. 1a bis 1g verdeutlichen eine Ausführungsform des erfindungsgemäβen Verfahrens zum Verbinden von Schaufelblättern mit einer Rotorscheibe bei einer Reparatur eines integral beschaufelten Gasturbinenrotors. Nach dem erfindungsgemäßen Verfahren wird dabei bei der Reparatur eines integral beschaufelten Gasturbinenrotors wie folgt vorgegangen:

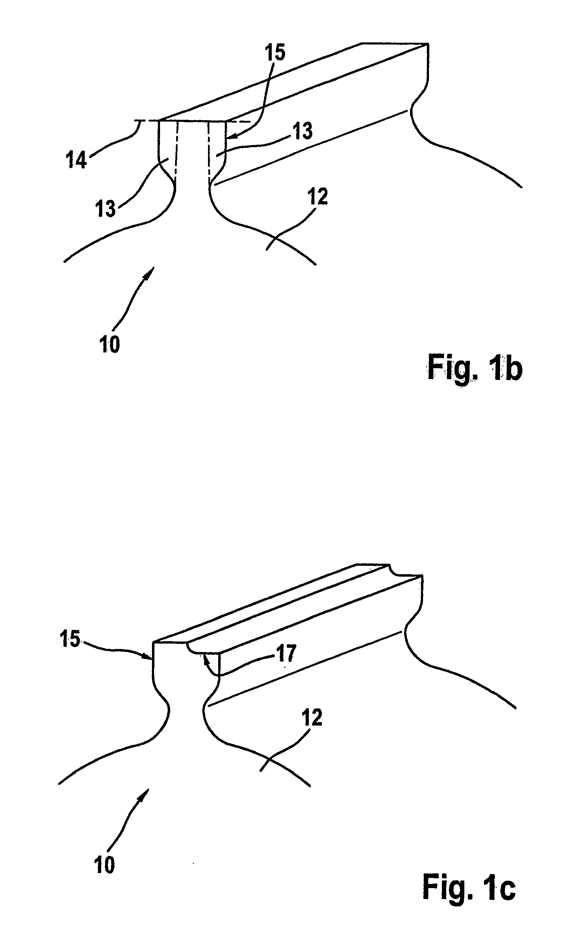

Fig. 1a zeigt einen integral beschaufelten Gasturbinenrotor 10 mit einem beschädigten Schaufelblatt 11, wobei zur Reparatur des in Fig. 1a gezeigten Gasturbinenrotors 10 das beschädigte Schaufelblatt 11 von einer Rotorscheibe 12 des Gasturbinenrotors 10 entfernt und durch ein neues Schaufelblatt ersetzt werden soll. Vor dem Abtrennen des beschädigten Schaufelblatts 11 von der Rotorscheibe 12 des integral beschaufelten Gasturbinenrotors 10 wird zumindest im Bereich einer späteren Trennstelle durch Laserpulverauftragschweißen sowohl auf der Saugseite als auch auf der Druckseite des Schaufelblatts 11 eine Aufdickung 13 bereitgestellt, um über den gesamten Bereich der Trennstelle einen möglichst kontinuierlichen bzw. gleichmäßigen Dickenverlauf zu gewährleisten. Darauffolgend wird das beschädigte Schaufelblatt 11 zum Beispiel entlang des in Fig. 1a gestrichelt dargestellten Trennschnitts 14 von der Rotorscheibe 12 getrennt. Nach dem Trennen des beschädigten Schaufelblatts 11 von der Rotorscheibe 12 liegt die in Fig. 1b gezeigte Anordnung vor, wobei die sich zuvor durch Laserpulverauftragschweißen hergestellte Aufdickung 13 im Bereich eines Abschnitts 15 der Rotorscheibe 12 erstreckt, an welchem zur Reparatur des Gasturbinenrotors 10 ein bereitgestelltes, neues Schaufelblatt befestigt werden soll.

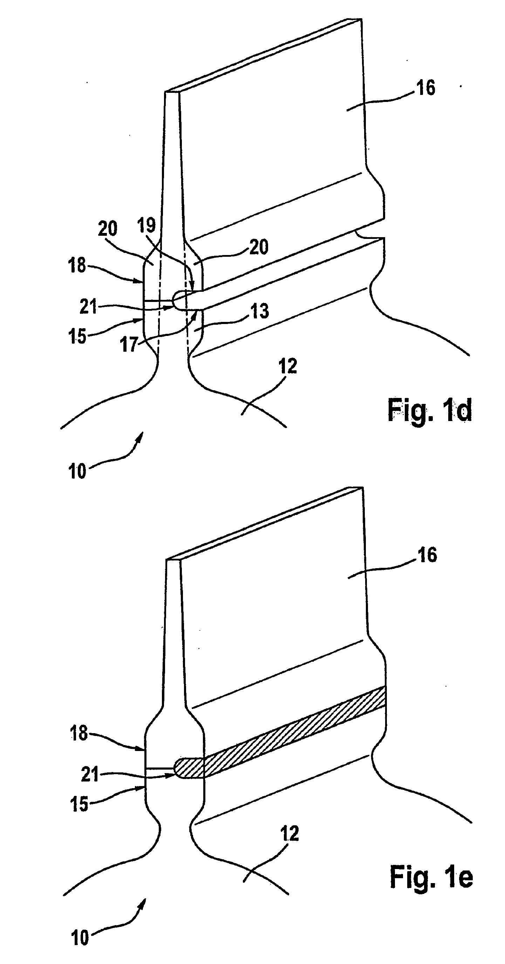

Der auf diese Art und Weise bereitgestellte Abschnitt 15 der Rotorscheibe 12, an welchem ein neues Schaufelblatt 16 (siehe Fig. 1d bis 1g) befestigt werden soll, wird im Sinne der hier vorliegenden Erfindung derart bearbeitet, dass am Abschnitt 15 mindestens eine Ausnehmung 17 ausgebildet wird. Im Ausführungsbeispiel der Fig. 1a bis 1g wird hierbei lediglich eine Ausnehmung 17 in den Abschnitt 15 eingearbeitet, wobei sich diese Ausnehmung 17 über die gesamte axiale Länge des Abschnitts 15 erstreckt. Dies kann insbesondere Fig. 1c entnommen werden.

Ebenso wird das bereitgestellte, neue Schaufelblatt 16 im Bereich eines Abschnitts 18, mit welchem das Schaufelblatt 16 am Abschnitt 15 der Rotorscheibe 12 befestigt werden soll, mit einer entsprechenden Ausnehmung 19 versehen, wobei, wie Fig. 1d entnommen werden kann, auch der Abschnitt 18 des Schaufelblatts 16 mit einer entsprechenden Aufdickung 20 versehen ist, um auch am Abschnitt 18 des neuen Schaufelblatts 16 einen kontinuierlichen bzw. gleichmäßigen Dickenverlauf bereitzustellen. Auch am Schaufelblatt 16 ist im Bereich des Abschnitts 18 lediglich auf einer Seite eine Ausnehmung 19 eingebracht, die sich wiederum über die gesamte axiale Länge des Schaufelblatts 16 erstreckt.

Nachfolgend werden, wie Fig. 1d entnommen werden kann, die Rotorscheibe 12 sowie das neue Schaufelblatt 16 derart zueinander ausgerichtet, dass eine positionsgerechte Verbindung von Schaufelblatt 16 und Rotorscheibe 12 erfolgen kann, wobei dann die Ausnehmungen 17 und 19 der Bereiche 15 und 18 von Rotorscheibe 12 und Schaufelblatt 16 einander gegenüberliegen und eine nutförmige Nahtvorbereitung 21 bilden. Die nutförmige Nahtvorbereitung 21 erstreckt sich wiederum über die gesamte axiale Länge von Schaufelblatt 16 und Rotorscheibe 12 im Bereich der miteinander zu verbindenden Abschnitte 15 und 18, und zwar im Ausführungsbeispiel der Fig. 1a bis 1g lediglich auf einer Seite des Schaufelblatts 16, wobei es sich bei dieser Seite um die Saugseite oder um die Druckseite des Schaufelblatts 16 handeln kann.

Anschließend wird das im Sinne der Fig. 1d relativ zur Rotorscheibe 12 ausgerichtete Schaufelblatt 16 mit der Rotorscheibe 12 dadurch verbunden, dass im Bereich der Nahtvorbereitung 21 ein Laserpulverauftragschweißen durchgeführt wird. So zeigt Fig. 1e schraffiert die über Laserpulverauftragschweißen ausgefüllte Nahtvorbereitung 21, wobei hierdurch das Schaufelblatt 16 mit der Rotorscheibe 12 an den Abschnitten 15 und 18 im Bereich der Nahtvorbereitung 21 verbunden ist.

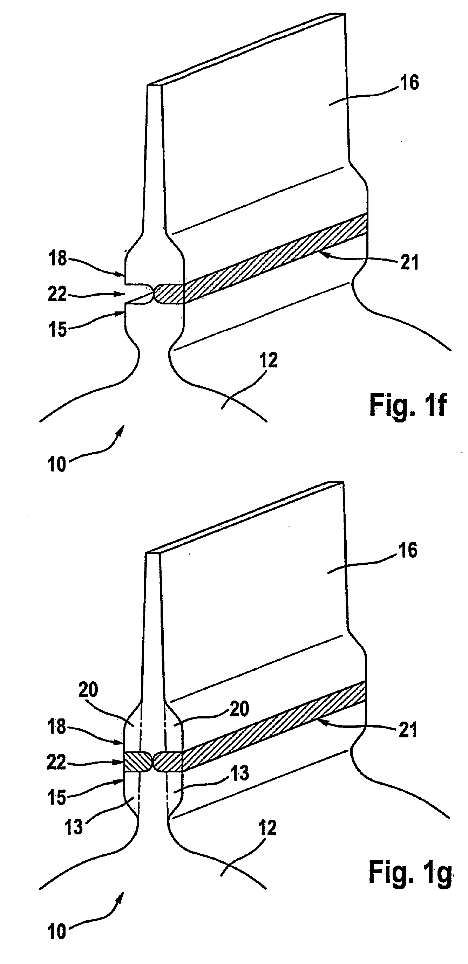

Darauffolgend wird im Ausführungsbeispiel der Fig. 1a bis 1g auf der gegenüberliegenden Seite des Schaufelblatts 16, an welchem das Schaufelblatt 16 mit der Rotorscheibe 12 noch nicht verbunden ist und damit auf der Rückseite der in die Nahtvorbereitung 21 eingebrachten Schweißnaht, eine weitere nutartige Nahtvorbereitung 22 eingebracht (siehe Fig. 1f). Befindet sich die Nahtvorbereitung 21, an welcher das Schaufelblatt 16 bereits mit der Rotorscheibe 12 verbunden ist, auf der Druckseite des Schaufelblatts 16, so wird demnach die weitere Nahtvorbereitung 22 in die Saugseite eingebracht. Die weitere Nahtvorbereitung 22 wird dabei derart in die miteinander zu verbindenden Abschnitte 15 und 18 von Rotorscheibe 12 und Schaufelblatt 16 eingebracht, dass Kerben und/oder Fehler im Bereich einer Schweißnahtwurzel der in die Nahtvorbereitung 21 durch Laserpulverauftragschweißen eingebrachten Schweißnaht beseitigt werden.

Darauffolgend wird dann, wie Fig. 1g zeigt, ein Laserpulverauftragschweiβen im Bereich der weiteren Nahtvorbereitung 22 durchgeführt und auch in diesem Bereich eine Schweißverbindung zwischen dem Schaufelblatt 16 und der Rotorscheibe 12 bereitgestellt.

Darauffolgend werden das mit der Rotorscheibe 12 beidseitig verbundene Schaufelblatt 16 sowie die Rotorscheibe 12 im Bereich der Aufdickungen 13 bzw. 20 derart bearbeitet, dass letztendlich ein integral beschaufelter Gasturbinenrotor mit einem vorgegebenen geometrischen, aerodynamisch günstigen Profil bereitgestellt wird. Dies erfolgt vorzugsweise durch Fräsen, insbesondere durch adaptives Fräsen. Hierbei werden die Aufdickungen 13 und 20 im Bereich der miteinander verbundenen Abschnitte 15 und 18 von Rotorscheibe 12 sowie Schaufelblatt 16 derart abgetragen, dass die in Figur 1g gestrichelte Kontur im Bereich der Rotorscheibe 12 sowie des Schaufelblatts 16 vorliegt. Die Aufdickungen 13 und 20 erstrecken sich dabei nicht lediglich im Bereich der beiden Seiten (Saugseite und Druckseite) des Schaufelblatts 16 sowie der Rotorscheibe 12, sondern auch im Bereich einer Strömungseintrittskante und Strömungsaustrittskante, so dass das durch die Aufdickungen 13 und 20 gegenüber der gestrichelten Kontur bereitgestellte Aufmass allseitig abgetragen wird.

Es sei nochmals an dieser Stelle darauf hingewiesen, dass im Ausführungsbeispiel der Fig. 1a bis 1g das Verschweißen von Schaufelblatt 16 und Rotorscheibe 12 zur Reparatur eines integral beschaufelten Gasturbinenrotors 10 derart erfolgt, dass zuerst eine Verbindung von Rotorscheibe 12 und Schaufelblatt 16 auf einer Seite durch Laserpulverauftragschweißen bereitgestellt wird, und dass anschließend auf der noch nicht verbundenen Seite eine weitere Nahtvorbereitung ausgebildet wird, an der darauffolgend ein separates Laserpulverauftragschweißen zur vollständigen Verbindung des Schaufelblatts 16 mit der Rotorscheibe 12 durchgeführt wird. Es sei an dieser Stelle bereits darauf hingewiesen, dass im Sinne der hier vorliegenden Erfindung selbstverständlich das Verbinden von Schaufelblatt 16 mit der Rotorscheibe 12 an beiden Seiten auch gleichzeitig durchgeführt werden kann. Hierzu müssen dann zu beiden Seiten der miteinander zu verbindenden Abschnitte 15 und 18 von Schaufelblatt 16 und Rotorscheibe 12 entsprechende Ausnehmungen eingebracht werden, sodass nach dem positionsgerechten zueinander Ausrichten von Schaufelblatt 16 und Rotorscheibe 12 zu beiden Seiten nutartige Nahtvorbereitungen vorliegen. In diesem Fall kann dann ein gleichzeitiges Verschweißen von Schaufelblatt 16 mit der Rotorscheibe 12 durch Laserpulverauftragschweißen erfolgen.

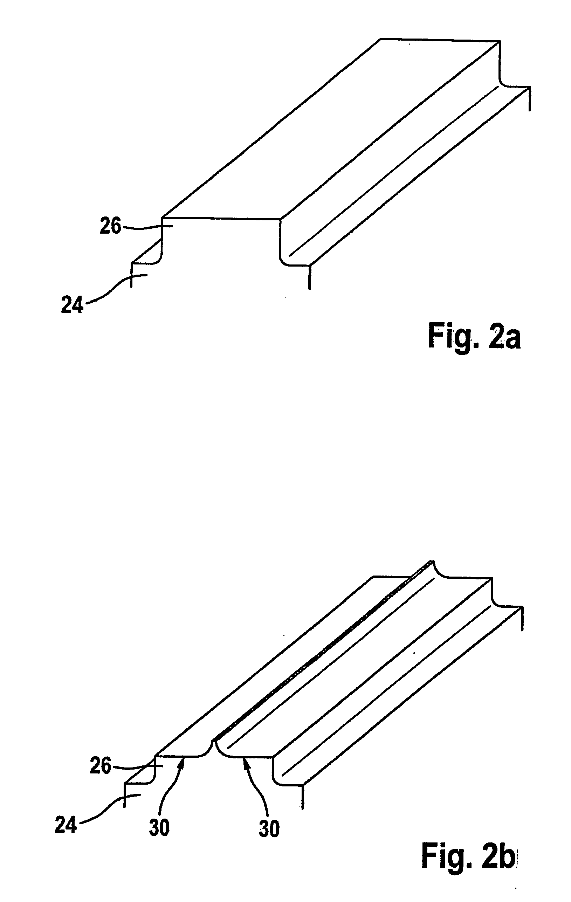

Fig. 2a bis 2d zeigen ein zweites Ausführungsbeispiel des erfindungsgemäβen Verfahrens beim Verbinden eines Schaufelblatts 23 mit einem Schaufelfuß 24 zur Herstellung einer Gasturbinenschaufel 25.

Hierzu wird gemäß Figur 2a ein Schaufelfuß 24 bereitgestellt, der an einem Abschnitt 26, an welchem das Schaufelblatt 23 mit einem Abschnitt 27 befestigt bzw. verbunden werden soll, eine Aufdickung 28 aufweist. Ebenso verfügt der Abschnitt 27 des Schaufelblatts 23 über eine entsprechende Aufdickung 29. Die Aufdickungen 28 und 29 dienen wiederum der Bereitstellung einer gleichmäßigen bzw. kontinuierlichen Dickenverteilung an den miteinander zu verbindenden Abschnitten 28 und 29 von Schaufelblatt 23 und Schaufelfuß 24.

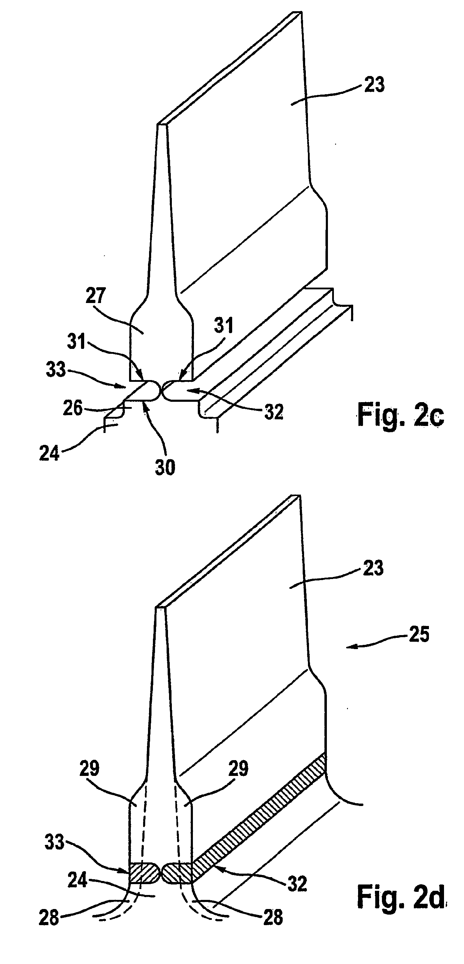

Darauffolgend werden (siehe insbesondere Fig. 2b und 2c) das Schaufelblatt 23 sowie der Schaufelfuß 24 an den Abschnitten 26 und 27 derart bearbeitet, dass Ausnehmungen 30 bzw. 31 bereitgestellt werden. Im Ausführungsbeispiel der Fig. 2a bis 2d werden dabei im Bereich des Abschnitts 26 des Schaufelfußes 24 zwei Ausnehmungen 30 eingebracht, wobei sich jede dieser beiden Ausnehmungen auf jeweils einer Seite, nämlich sowohl auf der Druckseite als auch auf der Saugseite, über die gesamte axiale Länge des Abschnitts 26 erstreckt. Ebenso werden in den Abschnitt 27 des Schaufelblatts 23 zwei Ausnehmungen 31 eingebracht, die sich ebenfalls zu beiden Seiten des Schaufelblatts 23 über die gesamte axiale Länge desselben erstrecken. Nach dem positionsgenauen Ausrichten von Schaufelblatt 23 und Schaufelblatt 24 (siehe Fig. 2c) werden hierdurch auf beiden Seiten, also sowohl auf der Druckseite als auch auf der Saugseite, sich über die gesamte axiale Länge erstreckende, nutartige Nahtvorbereitungen 32 und 33 gebildet. Im Bereich dieser beiden nutartigen Nahtvorbereitungen 32 und 33 erfolgt dann zu beiden Seiten des Schaufelblatts 23 gleichzeitig ein Verbinden des Schaufelblatts 23 mit dem Schaufelfuß 24 über Laserpulverauftragschweißen. Fig. 2d zeigt die über Laserpulverauftragschweißen mit einer Schweißnaht befüllten Nahtvorbereitungen 32 und 33 in schraffierter Darstellung.

Nach dem Verbinden des Schaufelblatts 23 mit dem Schaufelfuß 24 auf die oben beschriebene Art und Weise erfolgt dann noch ein Bearbeiten von Schaufelblatt 23 und Schaufelfuß 24 im Bereich der Aufdickungen 28 und 29 zur Bereitstellung einer Gasturbinenschaufel mit einem vorgegebenen geometrischen Profil, welches in Fig. 2d gestrichelt dargestellt ist. Diese Bearbeitung erfolgt wiederum vorzugsweise durch Fräsen, insbesondere durch adaptives Fräsen.

Mit dem erfindungsgemäßen Verfahren können hochfeste Verbindungen zwischen Schaufelblättern und Schaufelfüßen bzw. zwischen Schaufelblättern und Rotorscheiben zur Herstellung bzw. Reparatur von Gasturbinenschaufeln oder integral beschaufelten Gasturbinenrotoren hergestellt werden. Das erfindungsgemäße Verfahren eignet sich auch dann, wenn die miteinander zu verbindenden Bauteile aus hochwarmfesten Werkstoffen hergestellt sind.

Die Details des Laserpulverauftragschweißens sind dem hier angesprochenen Fachmann geläufig und bedürfen keiner näheren Erläuterung. An dieser Stelle sei lediglich darauf hingewiesen, dass insbesondere bei der Reparatur von integral beschaufelten Rotorscheiben im Sinne des erfindungsgemäßen Verfahrens Laserschweißköpfe Verwendung finden müssen, die eine Strahlumlenkung von bis zu 90° erlauben, da zwischen benachbarten Schaufelblättern eines integral beschaufelten Rotors lediglich ein geringer Raum zur Verfügung steht. Das Laserlicht sowie das zum Laserpulverauftragschweißen benötigte, pulverförmige Material werden in diesem Fall in radialer Richtung von außen zugeführt und müssen im Bereich der nutartigen Nahtvorbereitungen um bis zu 90° umgelenkt werden, um das Laserlicht sowie das pulverförmige Material positionsgenau in die Nahtvorbereitungen einführen zu können.

## Patentansprüche

1. Verfahren zum Verbinden von Schaufelblättern mit Schaufelfüßen oder Rotorscheiben bei der Herstellung und/oder Reparatur von Gasturbinenschaufeln oder integral beschaufelten Gasturbinenrotoren, mit zumindest den folgenden Schritten:
a) Bereitstellen eines Schaufelblatts (16; 23) und eines mit dem Schaufelblatt (23) zu verbindenden Schaufelfußes (24) oder einer mit dem Schaufelblatt (16) zu verbindenden Rotorscheibe (12), wobei das Schaufelblatt (16; 23) und der Schaufelfuß (24) bzw. die Rotorscheibe (12) an zu verbindenden Abschnitten (15, 18; 26, 27) derselben eine Aufdickung (13, 20; 28, 29) aufweisen;
b) abschlieβendes Bearbeiten von miteinander verbundenem Schaufelblatt (16; 23) und Schaufelfuß (24) bzw. Rotorscheibe (12) zur Bereitstellung einer Gasturbinenschaufel (25) oder eines integral beschaufelten Gasturbi- nenrotors (10) mit einem vorgegebenen geometrischen Profil;
**dadurch gekennzeichnet, dass** zwischen den Arbeitsschritten a) und b) folgende Arbeitsschritte durchgeführt werden :
c) Bearbeiten der miteinander zu verbindenden Abschnitte (15, 18; 26, 27) von Schaufelblatt (16; 23) und Schaufelfuß (24) bzw. Rotorscheibe (12) unter Ausbildung von Ausnehmungen (17, 19; 30, 31)
d) nachfolgendes zueinander Ausrichten des Schaufelblatts (16; 13) und des mit dem Schaufelblatt zu verbindenden Schaufelfußes (24) bzw. der Rotorscheibe (12), wobei gegenüberliegende Ausnehmungen (17, 19; 30, 31) mindestens eine nutförmige Nahtvorbereitung (21; 32, 33) begrenzen;
e) Verbinden von Schaufelblatt (16; 23) und Schaufelfuß (24) bzw.
Rotorscheibe (12) im Bereich der oder jeder Nahtvorbereitung (21; 32, 33) durch Laserpulverauftragschweißen.

2. Verfahren nach Anspruch 1,
**dadurch gekennzeichnet,**
**dass** sich die Ausnehmungen (17, 19; 30, 31) und damit die oder jede Nahtvorbereitung (21; 32, 33) zwischen einer Strömungseintrittskante und einer Strömungsaustrittskante des Schaufelblatts (16, 23) über die gesamte axiale Länge desselben erstrecken.

3. Verfahren nach Anspruch 1 oder 2,
**dadurch gekennzeichnet,**
**dass** sich nach dem Ausrichten im Sinne des Schritts c) die Ausnehmungen (30, 31) und damit die Nahtvorbereitungen (32, 33) sowohl auf einer Saugseite als auch auf einer Druckseite des Schaufelblatts (23) erstrecken, wobei das Laserpulverauftragweißen im Bereich der Nahtvorbereitungen (30, 31) auf der Saugseite und der Druckseite gleichzeitig durchgeführt wird.

4. Verfahren nach Anspruch 1 oder 2,
**dadurch gekennzeichnet,**
**dass** sich nach dem Ausrichten im Sinne des Schritts c) die Ausnehmungen (17, 19) und damit die Nahtvorbereitung (21) lediglich auf einer Seite, entweder auf einer Saugseite oder einer Druckseite, des Schaufelblatts (16) erstreckt, wobei das Laserpulverauftragweißen im Bereich dieser einen Nahtvorbereitung (21) auf der einen Seite durchgeführt wird.

5. Verfahren nach Anspruch 4,
**dadurch gekennzeichnet,**
**dass** anschließend auf der anderen Seite, entweder auf der Druckseite oder der Saugseite, von bereits miteinander verbundenem Schaufelblatt (16) und Schaufelfuß bzw. Rotorscheibe (12) eine weitere nutförmige Nahtvorbereitung (22) derart ausgebildet wird, dass Kerben und/oder Fehler im Bereich einer Schweißwurzel der durch Laserpulverauftragweißen bereits ausgebildeten Schweißnaht entfernt werden, wobei darauffolgend das Laserpulverauftragweißen im Bereich dieser weiteren Nahtvorbereitung (22) auf der anderen Seite durchgeführt wird.

6. Verfahren nach einem oder mehreren der Ansprüche 1 bis 5,
**dadurch gekennzeichnet,**
**dass** das Bearbeiten von miteinander verbundenem Schaufelblatt (16; 23) und Schaufelfuß (24) bzw. Rotorscheibe (12) im Sinne des Schritts e) durch Fräsen erfolgt.

7. Verfahren nach einem oder mehreren der Ansprüche 1 bis 6,
**dadurch gekennzeichnet,**
**dass** zum Reparieren eines integral beschaufelten Gasturbinenrotors (10) im Sinne des Schritts a) ein beschädigtes Schaufelblatt (11) vom integral beschaufelten Gasturbinenrotor (10) abgetrennt wird, wobei zuvor zumindest im Bereich der Trennstelle (14) durch Laserpulverauftragschweißen die entsprechende Aufdickung (13) bereitgestellt wird.

## Claims

1. A method for connecting blades to blade roots or rotor discs during the production and/or repair of gas turbine blades or integrally bladed gas turbine rotors, having at least the following steps of:
a) providing a blade (16; 23) and a blade root (24) which is intended to be connected to the blade (23) or a rotor disc (12) which is intended to be connected to the blade (16), the blade (16; 23) and the blade root (24) or the rotor disc (12) having, on portions (15, 18; 26, 27) thereof which are intended to be connected, a thickened portion (13, 20; 28, 29) ;
b) finally processing the blade (16; 23) and blade root (24) or rotor disc (12) which have been connected to each other in order to provide a gas turbine blade (25) or an integrally bladed gas turbine rotor (10) with a predetermined geometric profile;
**characterised in that**, between the operating steps a) and b), the following operating steps are carried out:
c) processing the portions (15, 18; 26, 27) of the blade (16; 23) and the blade root (24) or rotor disc (12) which are intended to be connected to each other by forming recesses (17, 19; 30, 31);
d) subsequent mutual alignment of the blade (16; 23) and the blade root (24) or the rotor disc (12) which is intended to be connected to the blade, opposing recesses (17, 19; 30, 31) delimiting at least one groove-like joint preparation (21; 32, 33);
e) connecting the blade (16; 23) and blade root (24) or rotor disc (12) in the region of the or each joint preparation (21; 32, 33) by means of laser powder build-up welding.

2. A method according to claim 1,
**characterised in that**
the recesses (17, 19; 30, 31) and consequently the or each joint preparation (21; 32, 33) extend between a flow inlet edge and a flow outlet edge of the blade (16, 23) over the entire axial length thereof.

3. A method according to claim 1 or claim 2, **characterised in that**,
following the alignment in accordance with step c), the recesses (30, 31) and consequently the joint preparations (32, 33) extend both at an intake side and a pressure side of the blade (23), the laser powder build-up welding being carried out in the region of the joint preparations (30, 31) at the intake side and the pressure side at the same time.

4. A method according to claim 1 or claim 2, **characterised in that**,
following the alignment in accordance with step c), the recesses (17, 19) and consequently the joint preparation (21) extends only at one side, either at an intake side or a pressure side, of the blade (16), the laser powder build-up welding being carried out in the region of this one joint preparation (21) at one side.

5. A method according to claim 4,
**characterised in that**,
subsequently at the other side, either at the pressure side or at the intake side, of the blade (16) and blade root or rotor disc (12) which have already been connected to each other, another groove-like joint preparation (22) is formed in such a manner that indentations and/or errors in the region of a weld root of the weld seam which has already been formed by means of laser powder build-up welding are removed, the laser powder build-up welding in the region of this additional joint preparation (22) subsequently being carried out at the other side.

6. A method according to one or more of claims 1 to 5, **characterised in that**
the processing of the blade (16; 23) and blade root (24) or rotor disc (12) which have been connected to each other is carried out in accordance with step e) by means of milling.

7. A method according to one or more of claims 1 to 6, **characterised in that**,
in order to repair an integrally bladed gas turbine rotor (10) in accordance with step a), a damaged blade (11) is separated from the integrally bladed gas turbine rotor (10), the corresponding thickened portion (13) being provided beforehand at least in the region of the separation location (14) by means of laser powder build-up welding.

## Revendications

1. Procédé pour la liaison d'aubes à des pieds d'aubes ou des disques de rotor lors de la fabrication et/ou à réparation d'aubes de turbines à gaz ou de rotors de turbines à gaz à aubage intégral, avec au moins les étapes suivantes :
a) mise à disposition d'une aube (16 ; 23) et d'un pied d'aube (24) à mettre en liaison avec l'aube (23) ou d'un disque de rotor (12) à mettre en liaison avec l'aube (16), l'aube (16 ; 23) et le pied d'aube (24) et/ou le disque de rotor (12) présentant un renflement (13, 20 ; 28, 29) sur des tronçons à relier (15, 18 ; 26, 27) ;
b) usinage final de l'aube (16 ; 23) et du pied d'aube (24) et/ou du disque de rotor (12) en liaison les uns avec les autres pour la mise à disposition d'une aube de turbine à gaz (25) ou d'un rotor de turbine à gaz à aubage intégral (10) avec un profil géométrique donné ;
**caractérisé en ce que**,
entre les étapes a) et b), on réalise les étapes suivantes :
c) usinage des tronçons à relier les uns aux autres (15, 18 ; 26, 27) de l'aube (16 ; 23) et du pied d'aube (24) et/ou du disque de rotor (12) en formant des évidements (17, 19 ; 30, 31) ;
d) orientation successive les uns par rapport aux autres de l'aube (16 ; 13) et du pied d'aube (24) à mettre en liaison avec l'aube et/ou disque de rotor (12), les évidements (17, 19 ; 30, 31) situés en vis-à-vis délimitant au moins une préparation de soudure en forme de rainure (21; 32, 33);
e) liaison entre l'aube (16 ; 23) et le pied d'aube (24) et/ou le disque de rotor (12) dans la zone de la ou de chacune des préparation(s) de soudure (21 ; 32, 33) grâce à un soudage au laser de revêtement par poudre.

2. Procédé selon la revendication 1, **caractérisé en ce que** les évidements (17, 19 ; 30, 31), et par conséquent la ou chacune des préparation(s) de soudure (21 ; 32, 33), s'étendent entre une arête d'entrée de flux et une arête de sortie de flux de l'aube (16, 23) sur l'ensemble de la longueur axiale de cette même.

3. Procédé selon la revendication 1 ou 2, **caractérisé en ce qu'**après l'orientation selon l'étape c), les évidements (30, 31) et par conséquent les préparations de soudures (32, 33) s'étendent sur un côté d'aspiration tout comme également sur un côté de pression de l'aube (23), moyennant quoi la soudure au laser de revêtement par poudre est réalisée dans la zone des préparations de soudure (30, 31) de manière simultanée sur le côté d'aspiration et le côté de pression.

4. Procédé selon la revendication 1 ou 2, **caractérisé en ce qu'**après l'orientation selon l'étape c), les évidements (17, 19) et par conséquent la préparation de soudure (21) s'étendent seulement sur un côté, soit sur un côté d'aspiration soit sur un côté de pression de l'aube (16), moyennant quoi le soudage au laser de revêtement par poudre est réalisé dans la zone de cette préparation de soudure (21) sur l'un de ces côtés.

5. Procédé selon la revendication 4, **caractérisé en ce que** l'on réalise ensuite sur l'autre côté, soit sur le côté de pression soit sur le côté d'aspiration de l'aube (16) déjà en liaison avec le pied d'aube et/ou le disque de rotor (12), une autre préparation de soudure en forme de rainure (22) de manière à ce que des encoches et/ou défauts dans la zone d'une racine de soudure de la soudure déjà formée par soudage au laser de revêtement par poudre soient éliminées, moyennant quoi l'on réalise ensuite le soudage au laser de revêtement par poudre dans la zone de cette autre préparation de soudure (22) sur l'autre côté.

6. Procédé selon l'une quelconque ou plusieurs des revendications 1 à 5, **caractérisé en ce que** l'usinage de l'aube (16 ; 23) en liaison avec le pied d'aube (24) et/ou le disque de rotor (12) s'effectue par fraisage selon l'étape e).

7. Procédé selon l'une quelconque ou plusieurs des revendications 1 à 6, **caractérisé en ce que**, pour la réparation d'un rotor de turbine à gaz à aubage intégral (10) conformément à l'étape a), une aube (11) endommagée est sectionnée du rotor de turbine à gaz à aubage intégral (10), moyennant quoi l'on met préalablement à disposition, au moins dans la zone de sectionnement (14), le renflement (13) correspondant grâce à un soudage au laser de revêtement par poudre.
